# EUROPÄISCHE PATENTSCHRIFT

(11) **EP 3 611 584 B1**
(45) Veröffentlichungstag und Bekanntmachung des Hinweises auf die Patenterteilung: **09.02.2022**
(21) Anmeldenummer: 19157423.5
(22) Anmeldetag: 15.02.2019
(51) Int. Cl.: G05B 19/404, B23B 13/12, B23Q 1/76

(54) **VERFAHREN ZUM BETRIEB EINER DREHMASCHINE MIT EINER LÜNETTE**
METHOD FOR OPERATING A LATHE WITH A STEADY REST
PROCÉDÉ DE FONCTIONNEMENT D'UN TOUR AVEC UNE LUNETTE

(30) Priorität: 16.08.2018 DE 102018119889
(43) Veröffentlichungstag der Anmeldung: 19.02.2020
(73) Patentinhaber: WEILER Werkzeugmaschinen GmbH, 91448 Emskirchen (DE)
(72) Erfinder: Kohl, Günter, 91564 Neuendettelsau (DE); Popp, Matthias, 90599 Dietenhofen (DE)
(74) Vertreter: Mielke, Klaus

(56) Entgegenhaltungen:
- EP-A2- 2 218 542
- WO-A1-98/02789
- DE-A1- 10 209 371

## Beschreibung

Die Erfindung betrifft ein Verfahren zum Betrieb einer Drehmaschine, welche eine Lünette mit Werkstückauflagen aufweist, die durch eine Steuerung verfahrbar sind.

Bei der Bearbeitung von schlanken Werkstücken mittels einer Drehmaschine ist es zur Vermeidung von Fehlbearbeitungen und Reduzierung von Schwingungen empfehlenswert, die Werkstücke mit Hilfe einer Lünette zu stützen. Hierzu wird ein Ende des Werkstücks in der Hauptspindel und das andere Ende in der Lünette eingespannt. Zur Spannung von Werkstücken weisen Lünetten zumindest zwei Auflagen auf, welche z.B. über Pinolen, Schwenkhebel oder Schlitten radial verstellbar sind.

Dabei ist es notwendig, das Werkstück in der Lünette so auszurichten, dass die Mittelachse des Werkstücks im Bereich der Lünette mit der Mittelachse der Hauptspindel der Drehmaschine fluchtet. Hierzu wird vor der Bearbeitung eines in Hauptspindel und Lünette eingespannten Werkstücks zunächst die Koordinatenabweichung zwischen der Rotationsachse des Werkstücks an der Hauptspindel und der Rotationsachse des Werkstücks an der Lünette bestimmt. Anschließend erfolgt durch einen Bediener die Verschiebung des Werkstücks in der Lünette durch Verstellung der einzelnen Stützrollen. Dieser Mess- und Verstellvorgang muss gegebenenfalls iterativ wiederholt werden.

Eine weitere Vorgehensweise zur manuellen Einrichtung einer Lünette ist aus der DE 102 09 371 A1 bekannt. Darin wird die Lünette zur Einrichtung unmittelbar am Spannfutter einer Bearbeitungsmaschine an ein Werkstück angelegt. Die Lünette ist so zur Hauptspindel der Bearbeitungsmaschine zentriert. Zudem wird einem Messsystem an den Pinolen ein gemeinsamer Zahlenwert als ein Basismaß vorgegeben. Vor dem Verschieben der Lünette an den Bearbeitungsort werden die Pinolen von dem Werkstück abgehoben. Das Messsystem an den Pinolen erfasst dabei den relativen Verstellweg der Pinolen. Nach dem Verschieben der Lünette wird die zentrierte Stellung der Pinolen reproduziert, indem die Pinolen um den relativen Verstellweg wieder an das Werkstück angelegt und so lange iterativ nachjustiert werden, bis das Messsystem den gemeinsamen Zahlenwert weitestgehend anzeigt.

Diese Einrichtungsvorgänge müssen für jedes zu spannende Werkstück erneut durchgeführt werden und sind somit insbesondere bei Lünetten mit manuell verstellbaren Pinolen für einen Bediener mit einem hohen Aufwand verbunden. Der Erfindung liegt die Aufgabe zu Grunde, den Aufwand zur fluchtenden Einspannung von Werkstücken in einer Lünette weiter zu reduzieren.

Die Aufgabe wird gelöst mit dem im Anspruch 1 angegebenen Verfahren. Vorteilhafte weitere Ausgestaltungen der Erfindung sind in den Unteransprüchen angegeben.

Bei dem erfindungsgemäßen Verfahren zum Betrieb einer Drehmaschine, welche eine Lünette mit Werkstückauflagen aufweist, die durch eine Steuerung verfahrbar sind, transformiert die Steuerung zur Einrichtung der Lünette die Werte der konstruktiven Mittelachse der Lünette mittels der Koordinatenabweichungen zwischen den Werten der konstruktiven Mittelachse und den Werten der Mittelachse der Hauptspindel der Drehmaschine zu den Werten einer kompensierten Mittelachse der Lünette und stellt zum Einspannen eines Werkstücks in die Lünette die Werkstückauflagen so ein, dass die Mittelachse des Werkstücks und die kompensierte Mittelachse der Lünette fluchten.

Als konstruktive Mittelachse der Lünette wird in der vorliegenden Anmeldung die quer zu den Verfahrachsen der Pinolen durch deren Schnittpunkt verlaufende Mittelachse bezeichnet. Die Mittelachse eines Werkstücks, welches durch gleichmäßiges radiales Verfahren der einzelnen Pinolen aus deren geöffneten Endpositionen heraus in der Lünette gespannt ist, liegt dann auf der konstruktiven Mittelachse der Lünette.

Die Koordinatenabweichungen in horizontaler und vertikaler Richtung zwischen der konstruktiven Mittelachse der Lünette und der Mittelachse der Hauptspindel der Drehmaschine sind vor der Einrichtung der Lünette zu ermitteln.

Gemäß der Erfindung erfolgt zur Einrichtung der Lünette in einer Drehmaschine durch die Steuerung mittels der Koordinatenabweichungen die Transformation der Werte der konstruktiven Mittelachse der Lünette zu einer kompensierten Mittelachse. Diese fluchtet sodann mit der Mittelachse der Hauptspindel der Drehmaschine. Ein Werkstück, welches entlang der Mittelachse der Hauptspindel in der Drehmaschine und der kompensierten Mittelachse in der Lünette eingespannt ist, weist somit eine zur Bearbeitung des Werkstücks notwendige hohe Zylindrizität auf.

Gemäß der Erfindung werden beim Einspannen von weiteren Werkstücken in die Lünette die Werkstückauflagen durch die Steuerung so eingestellt, dass die Mittelachse des jeweiligen Werkstücks, die kompensierte Mittelachse der Lünette und die Mittelachse der Hauptspindel der Drehmaschine fluchten. Die zur Einrichtung der Lünette in der Drehmaschine durchgeführte Koordinatentransformation wird somit durch die Steuerung beim Einspannen von weiteren Werkstücken in die Lünette automatisch beibehalten.

Der besondere Vorteil des erfindungsgemäßen Verfahrens besteht somit in der einmaligen Einrichtung der Lünette in einer Drehmaschine und in der automatischen Berücksichtigung der Koordinatenabweichungen beim Einspannen weiterer Werkstücke. Eine erneute Einrichtung der Lünette für jedes zu spannende Werkstück ist somit nicht notwendig. Es wird so vorteilhaft der Aufwand zur fluchtenden Einspannung von Werkstücken in einer Lünette reduziert.

Bei einer weiteren vorteilhaften Ausführung der Erfindung wird vor der Einrichtung der Lünette ein Werkstück auf die Werkstückauflagen aufgelegt, die Werkstückauflagen von der Steuerung unter Berücksichtigung des Wertes des Durchmessers des Werkstücks so verfahren, dass die Mittelachse des Werkstücks und die konstruktive Mittelachse der Lünette fluchten und die Koordinatenabweichungen zwischen der Mittelachse des Werkstücks und der Mittelachse der Hauptspindel der Drehmaschine gemessen.

Hierfür wird ein Ende des Werkstücks in der Hauptspindel eingespannt, das andere Ende in die Lünette eingelegt und der Steuerung der Durchmesser des Werkstücks vorgegeben. Nach dem gleichmäßigen radialen Verfahren der Werkstückauflagen aus der geöffneten Endposition heraus liegt die Mittelachse des Werkstücks auf der konstruktiven Mittelachse der Lünette. Es erfolgt dann am Werkstück im Bereich der Hauptspindel sowie im Bereich der Lünette die Messung der Koordinatenabweichung quer zur Mittelachse der Hauptspindel in vertikaler und horizontaler Richtung. Die Messwerte der Koordinatenabweichungen werden zur Einrichtung der Lünette an die Steuerung übergeben. Es wird so vorteilhaft der Aufwand zur Einrichtung einer Lünette reduziert.

Gemäß einer anderen vorteilhaften Ausführung der Erfindung wird vor der Einrichtung der Lünette ein Werkstück auf zwei untere Werkstückauflagen aufgelegt, die zwei Werkstückauflagen und eine oberhalb des Werkstücks angeordnete dritte Werkstückauflage von der Steuerung so verfahren, dass die Mittelachse des Werkstücks und die konstruktive Mittelachse der Lünette fluchten und die Koordinatenabweichungen zwischen der Mittelachse des Werkstücks und der Mittelachse der Hauptspindel der Drehmaschine gemessen.

Dabei wird ein Ende des Werkstücks in der Hauptspindel eingespannt und das andere Ende in die Lünette eingelegt. Nach dem gleichmäßigen radialen Verfahren der drei Werkstückauflagen aus der geöffneten Endposition heraus liegt die Mittelachse des Werkstücks auf der konstruktiven Mittelachse der Lünette. Es erfolgt dann am Werkstück im Bereich der Hauptspindel sowie im Bereich der Lünette die Messung der Koordinatenabweichung quer zur Mittelachse der Hauptspindel in vertikaler und horizontaler Richtung. Die Messwerte der Koordinatenabweichungen werden zur Einrichtung der Lünette an die Steuerung übergeben. Es wird so vorteilhaft der Aufwand zur Einrichtung einer Lünette reduziert. Ein besonderer Vorteil dieser Ausführung ist, dass die Vorgabe des Durchmessers des eingelegten Werkstücks in der Steuerung zur Einrichtung der Lünette nicht notwendig ist. Der Aufwand zur Einrichtung einer Lünette wird so weiter reduziert.

In einer weiteren vorteilhaften Ausführung der Erfindung werden die Werkstückauflagen bis zum Erreichen einer vorgebbaren Spannkraft an einer Werkstückauflage von der Steuerung verfahren. Das gleichmäßige radiale Verfahren der drei Werkstückauflagen aus der geöffneten Endposition heraus erfolgt nur bis an einer der Werkstückauflagen ein der Steuerung vorgebbarer Wert einer Spannkraft erreicht ist. Bei Erreichen dieses Werts erfolgt durch die Steuerung eine Abschaltung des gleichmäßigen Verfahrens der Werkstückauflagen. Es wird so vorteilhaft die Genauigkeit der Bestimmung der Mittelachse des Werkstücks verbessert und die Gefahr von Beschädigungen am Werkstück durch Pressung der Werkstückauflagen reduziert.

Besonders vorteilhaft wird die Spannkraft an der oberhalb des Werkstücks angeordneten dritten Werkstückauflage ermittelt. Beim Anlegen der Werkstückauflagen an das Werkstück und beim Aufbringen einer Spannkraft auf das Werkstück wirkt auf die unteren zwei Werkstückauflagen zusätzlich die Gewichtskraft des Werkstücks ein. Auf die dritte Werkstückauflage über dem Werkstück wirkt nur die auf das Werkstück ausgeübte Spannkraft ein. Es ist somit an der dritten Werkstückauflage die Ermittlung der Spannkraft ohne den Einfluss der Gewichtskraft des Werkstücks möglich. Es wird so vorteilhaft die Genauigkeit bei der Ermittlung der Spannkraft verbessert.

Gemäß einer weiteren vorteilhaften Ausführung der Erfindung wird die dritte Werkstückauflage während des Einstellens der unteren Werkstückauflagen durch die Steuerung vom Werkstück abgehoben. Das Werkstück liegt somit während des Einstellens nur auf den zwei unteren Werkstückauflagen auf. Es wird so das ungehinderte Einstellen des Werkstücks in der Lünette verbessert und die Gefahr von Beschädigungen an Werkstück und Lünette durch eine mögliche Kollision des Werkstücks mit der dritten Werkstückauflage während des Einstellens reduziert.

Die Erfindung und weitere vorteilhafte Ausführungen derselben werden anhand der kurz angeführten Figuren nachfolgend näher erläutert. Dabei zeigen jeweils in einer schematischen Schnittansicht durch die Lünette quer zu den Mittelachsen von Drehmaschine, Lünette und Werkstück
- Fig. 1: eine erste beispielhafte, gemäß dem erfindungsgemäßen Verfahren betriebene Lünette mit zwei Werkstückauflagen und einem ersten Werkstück vor der Einrichtung,
- Fig. 2: die erste beispielhafte Lünette bei der Messung der Koordinatenabweichungen,
- Fig. 3: die erste beispielhafte Lünette nach Kompensation der Koordinatenabweichungen,
- Fig. 4: die erste beispielhafte Lünette nach Kompensation der Koordinatenabweichungen mit einem zweiten Werkstück,
- Fig. 5: eine zweite beispielhafte, gemäß dem erfindungsgemäßen Verfahren betriebene Lünette mit drei Werkstückauflagen und einem ersten Werkstück vor der Einrichtung,
- Fig. 6: die zweite beispielhafte Lünette bei der Messung der Koordinatenabweichungen,
- Fig. 7: die zweite beispielhafte Lünette mit abgehobener dritter Werkstückauflage vor der Kompensation der Koordinatenabweichungen,
- Fig. 8: die zweite beispielhafte Lünette mit abgehobener dritter Werkstückauflage nach Kompensation der Koordinatenabweichungen,
- Fig. 9: die zweite beispielhafte Lünette mit wieder angelegter dritter Werkstückauflage nach Kompensation der Koordinatenabweichungen, und
- Fig. 10: die zweite beispielhafte Lünette nach Kompensation der Koordinatenabweichungen mit einem zweiten Werkstück.

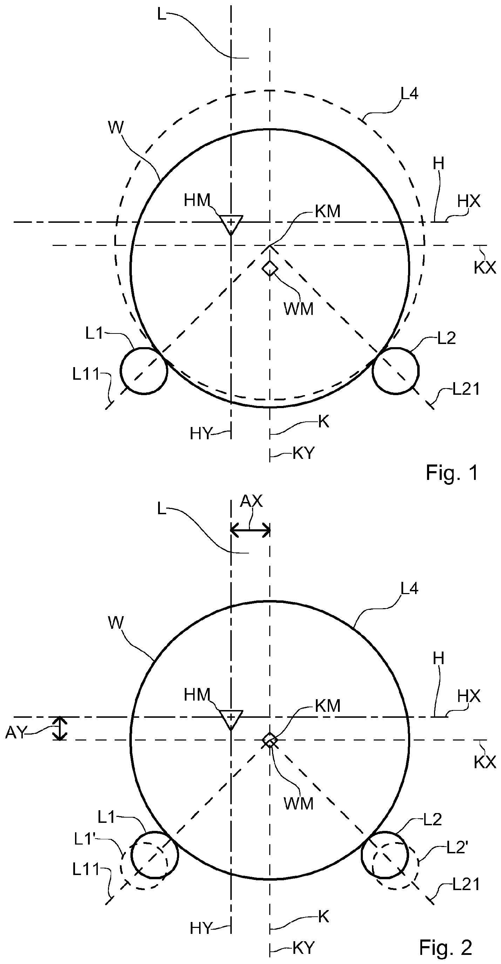

Gemäß der Darstellung in Fig. 1 ist die erste beispielhafte gemäß dem erfindungsgemäßen Verfahren betriebene Lünette L in einer Ausgangsstellung vor der Einrichtung dargestellt. Die Lünette L weist zwei Werkstückauflagen L1, L2 auf. Weitere Komponenten der Lünette L, insbesondere die Pinolen und deren Antriebe zum Verfahren der Werkstückauflagen L1, L2 und die Steuerung der Lünette, sind zur Verbesserung der Übersichtlichkeit nicht dargestellt. Das konstruktive Koordinatensystem K der Lünette L ist in den schematischen Darstellungen der Figuren mit einer gestrichelten Linie dargestellt. Im Schnittpunkt von Abszisse KX und Ordinate KY des Koordinatensystems K der Lünette L verläuft die konstruktive Mittelachse KM des Koordinatensystems K der Lünette L. Sämtliche Mittelachsen verlaufen in den vorliegenden Figuren quer zur Darstellungsebene und sind daher jeweils nur schematisch als Punkte dargestellt.

Weiterhin sind mit gestrichelten Linien die Verfahrachsen L11, L21 der Werkstückauflagen L1, L2 dargestellt. Diese schneiden sich ebenfalls im Schnittpunkt von Abszisse KX und Ordinate KY des Koordinatensystems K der Lünette L und somit in der konstruktiven Mittelachse KM des Koordinatensystems K der Lünette L.

Außerdem ist in den Figuren mit einer weiteren gestrichelten Linie das Koordinatensystem H der Hauptspindel der Drehmaschine dargestellt. Dieses weist ebenso eine Abszisse HX und eine Ordinate HY sowie eine Mittelachse HM in deren Schnittpunkt auf. Die Mittelachse HM des Koordinatensystems H der Hauptspindel ist in den vorliegenden Figuren mit einem dreieckigen Symbol hervorgehoben.

In der Lünette L ist ein Werkstück W auf die Werkstückauflagen L1, L2 aufgelegt. Die Mittelachse WM des Werkstücks W ist in den vorliegenden Figuren durch ein viereckiges Symbol hervorgehoben. Die Lünette L befindet sich in einer Ausgangsstellung mit weit geöffneten Werkstückauflagen L1, L2. Der Durchmesser des Werkstücks W wurde noch nicht an die Steuerung übergeben. Weiterhin ist in den Figuren mit einer gestrichelten Linie der Inkreis L4 der Werkstückauflagen L1, L2 dargestellt. Dieser stellt den mit der jeweiligen Öffnungsweite der Lünetten spannbaren Durchmesser dar. Der Inkreis L4 verläuft vorliegend um die konstruktive Mittelachse KM des Koordinatensystems K der Lünette L und weist einen größeren Durchmesser als das Werkstück W auf. Das Werkstück W kommt somit tiefer in der Lünette L zu liegen, sodass die Mittelachse WM des Werkstücks W unterhalb der konstruktiven Mittelachse KM des Koordinatensystems K der Lünette L angeordnet ist.

In Fig. 2 wurde vor der Einrichtung der Lünette L der Wert des Durchmessers des Werkstücks W an die Steuerung übergeben. Die Werkstückauflagen L1, L2 wurden von der Steuerung unter Berücksichtigung des Wertes des Durchmessers des Werkstücks W so verfahren, dass die Mittelachse WM des Werkstücks W und die konstruktive Mittelachse KM der Lünette L fluchten. Die Werkstückauflagen sind jeweils entlang deren Verfahrachsen radial in Richtung des Werkstücks W verfahren. Die vorhergehenden Stellungen der Werkstückauflagen gemäß der vorhergehenden Figur sind in den Figuren jeweils mit einer gestrichelten Linie dargestellt. So wurden in Fig. 2 die erste Werkstückauflage L1 entlang der Verfahrachse L11 aus der vorhergehenden Stellung L1' gemäß Fig. 1 und die zweite Werkstückauflage L2 entlang der Verfahrachse L21 aus der vorhergehenden Stellung L2' gemäß Fig. 1 in Richtung des Werkstücks W verfahren. Die Mittelachse WM des Werkstücks W fluchtet mit der konstruktiven Mittelachse KM des Koordinatensystems K der Lünette L. Der Inkreis K4 der Werkstückauflagen L1, L2 liegt auf dem Durchmesser des Werkstücks W.

Es erfolgt nun vorteilhaft die Messung der Koordinatenabweichungen, nämlich der Abszissenabweichung AX und der Ordinatenabweichung AY, zwischen der Mittelachse WM des Werkstücks W und der Mittelachse HM des Koordinatensystems H der Hauptspindel der Drehmaschine. Die Messung kann manuell z.B. unter Verwendung einer auf dem Werkzeugschlitten der Drehmaschine zwischen Hauptspindel und Lünette verfahrenen Messuhr erfolgen oder automatisiert z.B. unter Verwendung eines optischen Messsystems oder eines das Werkstück abtastenden Messsystems erfolgen. Die gemessenen Koordinatenabweichungen AX, AY werden an die Steuerung übergeben.

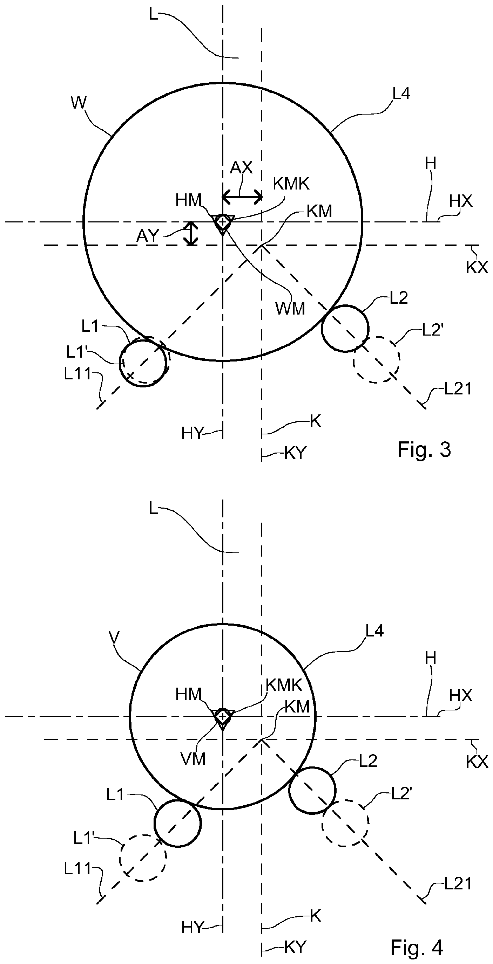

In Fig. 3 wurden gemäß der Erfindung durch die Steuerung zur Einrichtung der Lünette L die Werte der konstruktiven Mittelachse KM der Lünette L mittels der Koordinatenabweichungen AX, AY zwischen den Werten der konstruktiven Mittelachse KM und den Werten der Mittelachse HM der Hauptspindel der Drehmaschine zu den Werten einer kompensierten Mittelachse KMK der Lünette L transformiert und zum Einspannen des Werkstücks W in die Lünette L die Werkstückauflagen L1, L2 so einstellt, dass die Mittelachse WM des Werkstücks W und die kompensierte Mittelachse KMK der Lünette L fluchten.

Die Werkstückauflage L1 wurde entlang der Verfahrachse L11 aus der vorhergehenden Position L1' in die in Fig. 2 dargestellte Position und die Werkstückauflage L2 entlang der Verfahrachse L21 aus der vorhergehenden Position L2' in die in Fig. 2 dargestellte Position verfahren. Dabei wurde das Werkstück W in der Lünette L so verlagert, dass dessen Mittelachse WM nicht mehr mit der konstruktiven Mittelachse KM des Koordinatensystems K der Lünette L sondern mit der kompensierten Mittelachse KMK des Koordinatensystems K der Lünette L und der Mittelachse HM des Koordinatensystems H der Hauptspindel der Drehmaschine fluchten. Die kompensierte Mittelachse KMK ist somit eine gesteuerte Mittelachse, die von der konstruktiven Mittelachse KM um die Koordinatenabweichungen AX, AY abweicht. Die Mittelachse WM des Werkstücks W liegt nun auf der Mittelachse HM des Koordinatensystems H der Hauptspindel der Drehmaschine, sodass die Lünette L in der Drehmaschine eingerichtet ist und eine Bearbeitung des Werkstücks W erfolgen kann. Die Werkstückauflagen L1, L2 sind entsprechend des Durchmessers des Werkstücks W eingestellt, sodass der Inkreis L4 der Werkstückauflagen L1, L2 um die kompensierte Mittelachse KMK der Lünette L auf dem Durchmesser des Werkstücks W liegt.

In Fig. 4 ist in der Lünette L als weiteres Werkstück das Werkstück V eingespannt, welches einen geringeren Durchmesser als das Werkstück W aufweist. Der Durchmesser des Werkstücks V wurde der Steuerung vorgegeben. Gemäß der Erfindung wurden durch die Steuerung zum Einspannen des Werkstücks V in die Lünette L die Werkstückauflagen L1, L2 so einstellt, dass die Mittelachse VM des Werkstücks V und die kompensierte Mittelachse KMK der Lünette L fluchten. Die Werkstückauflagen L1, L2 wurden durch die Steuerung radial aus deren vorhergehenden Stellungen L1', L2' gemäß Fig. 3 entlang der Verfahrachsen L11, L21 verfahren. Dabei wurden die bei der Einrichtung der Lünette durch die Steuerung anhand der Koordinatenabweichungen AX, AY ausgeführte Transformation der konstruktiven Mittelachse KM der Lünette L zu der kompensierten Mittelachse KMK von der Steuerung beibehalten, sodass die Mittelachse VM des Werkstücks V und die Mittelachse HM des Koordinatensystems H der Hauptspindel der Drehmaschine ohne erneute Einrichtung fluchten. Es wird so vorteilhaft der Aufwand zur fluchtenden Einspannung von Werkstücken in der Lünette L reduziert. Der Inkreis L4 verläuft nun um die kompensierte Mittelachse KMK und weist denselben Durchmesser wie das Werkstück V auf.

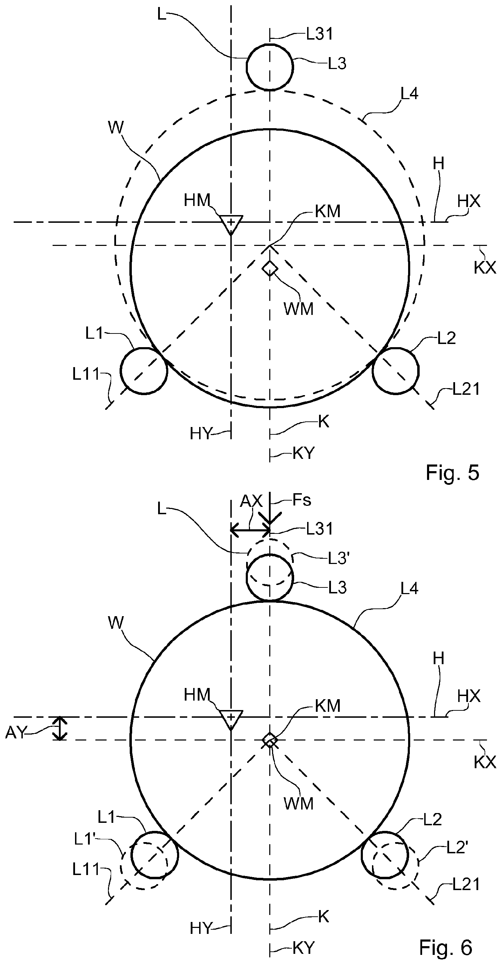

In Fig. 5 ist eine zweite beispielhafte, gemäß dem erfindungsgemäßen Verfahren betriebene Lünette L in einer Ausgangsstellung vor deren Einrichtung dargestellt. Diese weist drei Werkstückauflagen auf, wobei die Werkstückauflagen L1, L2 unter dem Werkstück W und die Werkstückauflage L3 über dem Werkstück W angeordnet ist. Weitere Komponenten der Lünette L, insbesondere die Pinolen und deren Antriebe zum Verfahren der Werkstückauflagen L1, L2, L3 und die Steuerung der Lünette, sind auch bei dieser Ausführung zur Verbesserung der Übersichtlichkeit nicht dargestellt. Das Koordinatensystem K der Lünette L und das Koordinatensystem H der Hauptspindel sind entsprechend den vorhergehenden Figuren dargestellt und werden nicht erneut erläutert. Die Verfahrachse L31 der dritten Werkstückauflage L3 liegt auf dem oberen Abschnitt der Ordinate KY oberhalb des konstruktiven Mittelpunkts KM des Koordinatensystems K der Lünette L.

In der Lünette L ist das Werkstück W auf die Werkstückauflagen L1, L2 aufgelegt. Die Lünette L befindet sich in einer Ausgangsstellung mit weit geöffneten Werkstückauflagen L1, L2, L3. Die Lünette L ist weiter geöffnet, als es für den Durchmesser des Werkstücks W notwendig ist. Dies ist am gestrichelt dargestellten Inkreis L4 der Werkstückauflagen L1, L2, L3 um die konstruktive Mittelachse KM des Koordinatensystems K der Lünette L erkennbar, welcher einen größeren Durchmesser als das Werkstück W aufweist. Dieses kommt somit tiefer in der Lünette L zu liegen, sodass die Mittelachse WM des Werkstücks W unterhalb der konstruktiven Mittelachse KM des Koordinatensystems K der Lünette L angeordnet ist.

In Fig. 6 ist die Lünette L vor der Einrichtung dargestellt, wobei das Werkstück W auf die zwei unteren Werkstückauflagen L1, L2 aufgelegt ist. Die zwei Werkstückauflagen L1, L2 und die oberhalb des Werkstücks W angeordnete dritte Werkstückauflage L3 wurden von der Steuerung so verfahren, dass die Mittelachse WM des Werkstücks W und die konstruktive Mittelachse KM der Lünette L fluchten. Hierfür wurden die Werkstückauflagen L1, L2, L3 von der Steuerung gleichmäßig radial aus der jeweils vorhergehenden Stellung L1', L2', L3' gemäß Figur 5 entlang der Verfahrachen L11, L21, L31 in Richtung der konstruktiven Mittelachse KM des Koordinatensystems K der Lünette L verfahren, bis diese am Werkstück W anliegen. Das Werkstück W wird somit durch die Werkstückauflagen L1, L2, L3 angetastet, sodass durch die Steuerung der Durchmesser des Werkstücks W bestimmt werden kann. Eine manuelle Vorgabe des Durchmessers des Werkstücks W an die Steuerung ist somit nicht notwendig.

Die Werkstückauflagen L1, L2, L3 sind vorteilhaft bis zum Erreichen einer vorgebbaren Spannkraft Fs an einer Werkstückauflage von der Steuerung verfahren. Die Spannkraft Fs ist in den Figuren symbolhaft durch einen Vektorpfeil dargestellt. Es wird so vorteilhaft die Genauigkeit der Bestimmung der Mittelachse WM des Werkstücks W verbessert und die Gefahr von Beschädigungen am Werkstück W durch Pressung der Werkstückauflagen L1, L2, L3 reduziert. Besonders vorteilhaft wird die Spannkraft Fs an der oberhalb des Werkstücks W angeordneten dritten Werkstückauflage L3 ermittelt. Es wird so vorteilhaft die Genauigkeit bei der Ermittlung der Spannkraft Fs verbessert. Die Mittelachse WM des Werkstücks W fluchtet mit der konstruktiven Mittelachse KM des Koordinatensystems K der Lünette L. Der Inkreis K4 der Werkstückauflagen L1, L2, L3 liegt auf dem Durchmesser des Werkstücks W.

Es erfolgt nun vorteilhaft die Messung der Koordinatenabweichungen, nämlich der Abszissenabweichung AX und der Ordinatenabweichung AY, zwischen der Mittelachse WM des Werkstücks W und der Mittelachse HM der Hauptspindel der Drehmaschine. Die Messung kann manuell z.B. unter Verwendung einer mit dem Werkezugschlitten der Drehmaschine zwischen Hauptspindel und Lünette bewegten Messuhr erfolgen oder automatisiert z.B. unter Verwendung eines optischen Messsystems oder eines das Werkstück abtastenden Messsystems erfolgen. Die gemessenen Koordinatenabweichungen AX, AY werden an die Steuerung übergeben.

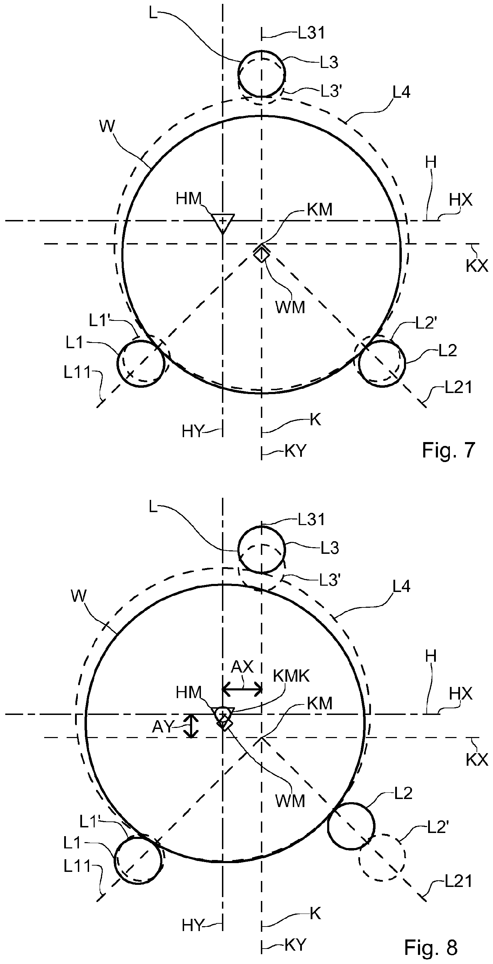

Gemäß der vorteilhaften Ausführung von Fig. 7 wird die dritte Werkstückauflage L3 während des Einstellens der unteren Werkstückauflagen L1, L2 durch die Steuerung vom Werkstück W abgehoben. Es wird so das ungehinderte Einstellen des Werkstücks in der Lünette verbessert und die Gefahr von Beschädigungen an Werkstück und Lünette durch eine mögliche Kollision des Werkstücks mit der dritten Werkstückauflage während des Einstellens reduziert. In Figur 7 ist die Lünette L nach Abheben der dritten Werkstückauflage L3 und vor Einstellen der unteren Werkstückauflagen L1, L2 dargestellt. In der vorliegenden Ausführung wird die dritte Werkstückauflage L3 durch Aufweitung des Inkreises L4 entlang der Verfahrachse L31 vom Werkstück abgehoben, sodass die Werkstückauflagen L1, L2 ebenfalls entlang deren Verfahrachsen L11, L21 verfahren werden. Der Inkreis L4 weist somit einen größeren Durchmesser als das Werkstück W auf, sodass dieses in der Lünette L tiefer zu liegen kommt und dessen Mittelachse WM unterhalb der konstruktiven Mittelachse KM des Koordinatensystems K der Lünette L angeordnet ist.

In der Darstellung von Fig. 8 werden gemäß der Erfindung zur Einrichtung der Lünette L die Werte der konstruktiven Mittelachse KM der Lünette L mittels der Koordinatenabweichungen AX, AY zwischen den Werten der konstruktiven Mittelachse KM und den Werten der Mittelachse HM der Hauptspindel der Drehmaschine zu den Werten einer kompensierten Mittelachse KMK der Lünette L transformiert. Die konstruktive Mittelachse KM des Koordinatensystems K der Lünette L ist somit in die kompensierte Mittelachse KMK verschoben, welche mit der Mittelachse HM des Koordinatensystems H der Hauptspindel der Drehmaschine fluchtet.

In der vorliegenden Ausführung der Erfindung wurde die Anwendung der Transformation der Mittelachsen durch Verfahren der Werkstückauflagen L1, L2, L3 als eigener Zwischenschritt separat vom vorteilhaften Wiederanlegen der dritten Werkstückauflage L3 nach dem Einstellen der der unteren Werkstückauflagen L1, L2 ausgeführt. Dabei wurde die Werkstückauflage L1 entlang der Verfahrachse L11 aus der vorhergehenden Position L1' in die in Fig. 8 dargestellte Position, die Werkstückauflage L2 entlang der Verfahrachse L21 aus der vorhergehenden Position L2' in die in Fig. 8 dargestellte Position und die dritte Werkstückauflage L3 entlang der Verfahrachse L31 aus der vorhergehenden Position L3' in die in Fig. 8 dargestellte Position verfahren. Der Inkreis L4 verläuft nun um die kompensierte Mittelachse KMK des Koordinatensystems K der Lünette L. Dabei wurde das Werkstück W in der Lünette L so verlagert, dass die Mittelachse WM annähernd unterhalb der kompensierten Mittelachse KMK des Koordinatensystems K der Lünette L und der Mittelachse HM des Koordinatensystems H der Hauptspindel der Drehmaschine verläuft.

In einer weiteren vorteilhaften Ausführung der Erfindung, welche in den Figuren nicht separat dargestellt ist, wird die Transformation nicht als eigener Zwischenschritt ausgeführt. Dabei erfolgt die Transformation der Mittelachsen zunächst nur in der Steuerung. Die Anwendung der Transformation durch Verfahren der Werkstückauflagen L1, L2, L3 erfolgt in Überlagerung mit dem Wiederanlegen der dritten Werkstückauflage L3 nach dem Einstellen der unteren Werkstückauflagen L1, L2. Der in Fig. 8 dargestellte Zwischenschritt wird bei dieser Ausführung somit übersprungen.

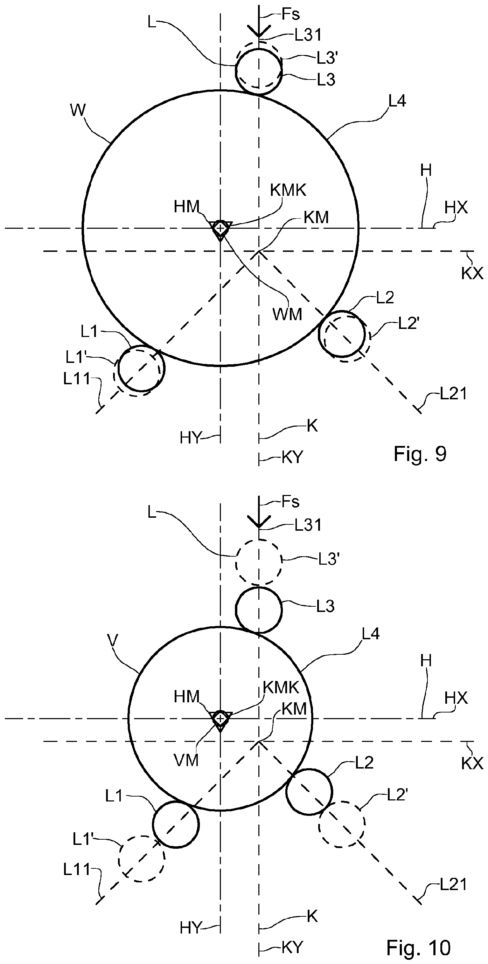

In Fig. 9 ist der Zustand nach dem Einrichten der Lünette L durch Einstellen der unteren Werkstückauflagen L1, L2 durch die Steuerung dargestellt. Die dritte Werkstückauflage L3 ist wieder durch Reduzierung des Inkreises L4 an das Werkstück W angelegt. Dabei wurden die unteren Werkstückauflagen L1, L2 entsprechend gleichförmig radial in Richtung der kompensierten Mittelachse KMK des Koordinatensystems K der Lünette L vorteilhaft bis zum Erreichen der Spannkraft Fs an der dritten Werkstückauflage L3 verfahren. Der Inkreis L4 weist nun denselben Durchmesser wie das Werkstück W auf. Die Mittelachse WM des Werkstücks W, die kompensierte Mittelachse KMK des Koordinatensystems K der Lünette L und die Mittelachse HM des Koordinatensystems H der Hauptspindel der Drehmaschine fluchten. Die Lünette L ist somit eingerichtet und das Werkstück W zur Bearbeitung in der Lünette L eingespannt.

In Fig. 10 ist in der Lünette L als weiteres Werkstück das Werkstück V eingespannt, welches einen geringeren Durchmesser als das Werkstück W aufweist. Gemäß der Erfindung wurden durch die Steuerung zum Einspannen des Werkstücks V in die Lünette L die Werkstückauflagen L1, L2, L3 so einstellt, dass die Mittelachse VM des Werkstücks V und die kompensierte Mittelachse KMK der Lünette L fluchten. Die Werkstückauflagen L1, L2, L3 wurden durch die Steuerung radial aus deren vorhergehenden Stellungen L1', L2', L3' gemäß Fig. 9 entlang der Verfahrachsen L11, L21, L31 vorteilhaft bis zum Erreichen der Spannkraft Fs an der dritten Werkstückauflage L3 verfahren. Dabei wurde die bei der Einrichtung der Lünette durch die Steuerung anhand der Koordinatenabweichungen AX, AY ausgeführte Transformation der konstruktiven Mittelachse KM der Lünette L zu der kompensierten Mittelachse KMK von der Steuerung beibehalten, sodass die Mittelachse VM des Werkstücks V ohne erneute Einrichtung und die Mittelachse HM des Koordinatensystems H der Hauptspindel der Drehmaschine fluchten. Es wird so vorteilhaft der Aufwand zur fluchtenden Einspannung von Werkstücken in der Lünette L reduziert.

### Bezugszeichenliste

- L: Lünette
- L1, L2, L3: Erste, zweite, dritte Auflage, insbesondere Stützrolle
- L11, L21, L31: Verfahrachse der ersten, zweiten, dritten Auflage L1, L2, L3
- L1', L2', L3': vorhergehende Stellung der ersten, zweiten, dritten Auflage L1, L2, L3
- L4: Inkreis der Auflagen
- K: Koordinatensystem der Lünette L
- KM: Konstruktive Mittelachse des Koordinatensystems K der Lünette L
- KMK: Kompensierte Mittelachse des Koordinatensystems K der Lünette L
- KX: Abszisse des Koordinatensystems K der Lünette L
- KY: Ordinate des Koordinatensystems K der Lünette L
- H: Koordinatensystem der Hauptspindel
- HM: Mittelachse des Koordinatensystems H
- HX: Abszisse des Koordinatensystems H
- HY: Ordinate des Koordinatensystems H
- W, V: erstes, zweites Werkstück
- WM, VM: Mittelachse der Werkstücke W, V
- AX: Abszissenabweichung
- AY: Ordinatenabweichung
- Fs: Spannkraft

## Patentansprüche

1. Verfahren zum Betrieb einer Drehmaschine, welche eine Lünette (L) mit Werkstückauflagen (L1, L2, L3) aufweist, die durch eine Steuerung verfahrbar sind, wobei die Steuerung
- zur Einrichtung der Lünette (L) die Werte der konstruktiven Mittelachse (KM) der Lünette (L) mittels der Koordinatenabweichungen (AX, AY) zwischen den Werten der konstruktiven Mittelachse (KM) und den Werten der Mittelachse (HM) der Hauptspindel der Drehmaschine zu den Werten einer kompensierten Mittelachse (KMK) der Lünette (L) transformiert, und
- zum Einspannen eines Werkstücks (W; V) in die Lünette (L) die Werkstückauflagen (L1, L2, L3) so einstellt, dass die Mittelachse (WM; VM) des Werkstücks (W; V) und die kompensierte Mittelachse (KMK) der Lünette (L) fluchten.

2. Verfahren nach Anspruch 1, wobei vor der Einrichtung der Lünette (L)
- ein Werkstück (W; V) auf zwei Werkstückauflagen (L1, L2) aufgelegt wird,
- die Werkstückauflagen (L1, L2) von der Steuerung unter Berücksichtigung des Wertes des Durchmessers des Werkstücks (W; V) so verfahren werden, dass die Mittelachse (WM; VM) des Werkstücks (W; V) und die konstruktive Mittelachse (KM) der Lünette (L) fluchten, und
- die Koordinatenabweichungen (AX, AY) zwischen der Mittelachse (WM; VM) des Werkstücks (W; V) und der Mittelachse (HM) der Hauptspindel der Drehmaschine gemessen werden.

3. Verfahren nach Anspruch 1, wobei vor der Einrichtung der Lünette (L)
- ein Werkstück (W; V) auf zwei untere Werkstückauflagen (L1, L2) aufgelegt wird,
- die zwei Werkstückauflagen (L1, L2) und eine oberhalb des Werkstücks (W; V) angeordnete dritte Werkstückauflage (L3) von der Steuerung so verfahren werden, dass die Mittelachse (WM; VM) des Werkstücks (W; V) und die konstruktive Mittelachse (KM) der Lünette (L) fluchten, und
- die Koordinatenabweichungen (AX, AY) zwischen der Mittelachse (WM; VM) des Werkstücks (W; V) und der Mittelachse (HM) der Hauptspindel der Drehmaschine gemessen werden.

4. Verfahren nach Anspruch 3, wobei
die Werkstückauflagen (L1, L2, L3) bis zum Erreichen einer vorgebbaren Spannkraft (Fs) an einer Werkstückauflage (L3) von der Steuerung verfahren werden.

5. Verfahren nach Anspruch 4, wobei
die Spannkraft (Fs) an der oberhalb des Werkstücks (W; V) angeordneten dritten Werkstückauflage (L3) ermittelt wird.

6. Verfahren nach Anspruch 3, 4 oder 5, wobei
die dritte Werkstückauflage (L3) während des Einstellens der unteren Werkstückauflagen (L1, L2) durch die Steuerung vom Werkstück (W; V) abgehoben wird.

## Claims

1. A method for operating a lathe which has a steady rest (L) with workpiece supports (L1, L2, L3), which can be moved by a controller, wherein the controller
- for the setting up of the steady rest (L), transforms the values of the constructive central axis (KM) of the steady rest (L) by means of the coordinate deviations (AX, AY) between the values of the constructive central axis (KM) and the values of the central axis (HM) of the main spindle of the lathe to the values of a compensated central axis (KMK) of the steady rest (L), and
- for the clamping of a workpiece (W; V) in the steady rest (L), adjusts the workpiece supports (L1, L2, L3) such that the central axis (WM; VM) of the workpiece (W; V) and the compensated central axis (KMK) of the steady rest (L) are aligned.

2. The method according to claim 1, wherein prior to the setting up of the steady rest (L)
- a workpiece (W; V) is placed upon two workpiece supports (L1, L2),
- the workpiece supports (L1, L2) are moved by the controller taking into consideration the value of the diameter of the workpiece (W; V) such that the central axis (WM; VM) of the workpiece (W; V) and the constructive central axis (KM) of the steady rest (L) are aligned, and
- the coordinate deviations (AX, AY) between the central axis (WM; VM) of the workpiece (W; V) and the central axis (HM) of the main spindle of the lathe are measured.

3. The method according to claim 1, wherein prior to the setting up of the steady rest (L)
- a workpiece (W; V) is placed on two lower workpiece supports (L1, L2),
- the two workpiece supports (L1, L2) and a third workpiece support (L3) arranged above the workpiece (W; V) are moved by the controller such that the central axis (WM; VM) of the workpiece (W; V) and the constructive central axis (KM) of the steady rest (L) are aligned, and
- the coordinate deviations (AX, AY) between the central axis (WM; VM) of the workpiece (W; V) and the central axis (HM) of the main spindle of the lathe are measured.

4. The method according to claim 3, wherein
the workpiece supports (L1, L2, L3) are moved by the controller until reaching a predefined clamping force (Fs) on a workpiece support (L3).

5. The method according to claim 4, wherein
the clamping force (Fs) is determined on the third workpiece support (L3) arranged above the workpiece (W; V).

6. The method according to claim 3, 4 or 5, wherein
the third workpiece support (L3) is lifted from the workpiece (W; V) by the controller during the adjustment of the lower workpiece supports (L1, L2).

## Revendications

1. Procédé destiné à faire fonctionner une machine tournante, laquelle présente une lunette (L) avec des supports de pièce à usiner (L1, L2, L3) qui peuvent être déplacés par un pilotage, dans lequel le pilotage
- pour l'aménagement de la lunette (L), transforme, au moyen des variations de coordonnées (AX, AY) entre les valeurs de l'axe central (KM) constructif et les valeurs de l'axe central (HM) de la broche principale de la machine tournante, les valeurs de l'axe central (KM) constructif de la lunette (L) en valeurs d'un axe central (KMK) compensé de la lunette (L), et
- pour enserrer une pièce à usiner (W ; V) dans la lunette (L), règle les supports de pièce à usiner (L1, L2, L3) de telle sorte que l'axe central (WM ; VM) de la pièce à usiner (W ; V) et l'axe central (KMK) compensé de la lunette (L) s'alignent.

2. Procédé selon la revendication 1, dans lequel avant l'aménagement de la lunette (L)
- une pièce à usiner (W ; V) est posée sur deux supports de pièce à usiner (L1, L2),
- les supports de pièce à usiner (L1, L2) sont déplacés par le pilotage, en tenant compte de la valeur du diamètre de la pièce à usiner (W ; V), de telle sorte que l'axe central (WM ; VM) de la pièce à usiner (W ; V) et l'axe central (KM) constructif de la lunette (L) s'alignent, et
- les variations de coordonnées (AX, AY) entre l'axe central (WM ; VM) de la pièce à usiner (W ; V) et l'axe central (HM) de la broche principale de la machine tournante sont mesurées.

3. Procédé selon la revendication 1, dans lequel avant l'aménagement de la lunette (L)
- une pièce à usiner (W ; V) est posée sur deux supports de pièce à usiner (L1, L2) inférieurs,
- les deux supports de pièce à usiner (L1, L2) et un troisième support de pièce à usiner (L3) agencé au-dessus de la pièce à usiner (W ; V) sont déplacés par le pilotage de telle sorte que l'axe central (WM ; VM) de la pièce à usiner (W ; V) et l'axe central (KM) constructif de la lunette (L) s'alignent, et
- les variations de coordonnées (AX, AY) entre l'axe central (WM ; VM) de la pièce à usiner (W ; V) et l'axe central (HM) de la broche principale de la machine tournante sont mesurées.

4. Procédé selon la revendication 3, dans lequel
les supports de pièce à usiner (L1, L2, L3) sont déplacés par le pilotage jusqu'à ce qu'une force de serrage (Fs) prédéfinie soit atteinte au niveau d'un support de pièce à usiner (L3).

5. Procédé selon la revendication 4, dans lequel
la force de serrage (Fs) est établie au niveau du troisième support de pièce à usiner (L3) agencé au-dessus de la pièce à usiner (W ; V).

6. Procédé selon la revendication 3, 4 ou 5, dans lequel
le troisième support de pièce à usiner (L3) est retiré par le pilotage de la pièce à usiner (W ; V), pendant le réglage des supports de pièce à usiner (L1, L2) inférieurs.
